(19)

Europäisches
Patentamt
European
Patent Office
Office européen
des brevets

(11) **EP 4 265 404 A1**

(12) **EUROPEAN PATENT APPLICATION**
published in accordance with Art. 153(4) EPC

(43) Date of publication:
**25.10.2023 Bulletin 2023/43**

(21) Application number: **22739474.9**

(22) Date of filing: **14.01.2022**

(51) International Patent Classification (IPC):
**B29K 23/00** (2006.01)   **B29K 105/04** (2006.01)
**B29L 7/00** (2006.01)   **B32B 5/32** (2006.01)
**B32B 27/32** (2006.01)   **C08J 9/00** (2006.01)
**B29C 44/06** (2006.01)   **B29C 67/20** (2006.01)
**H01M 50/409** (2021.01)

(52) Cooperative Patent Classification (CPC):
**B29C 44/06; B29C 67/20; B32B 5/32; B32B 27/32;**
**C08J 9/00; H01M 50/409;** B29K 2023/00;
B29K 2105/04; B29L 2007/00

(86) International application number:
**PCT/JP2022/001026**

(87) International publication number:
**WO 2022/154069 (21.07.2022 Gazette 2022/29)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **18.01.2021 JP 2021005519**

(71) Applicant: **Toray Industries, Inc.**
**Tokyo 103-8666 (JP)**

(72) Inventors:
• **NAKAJIMA, Konomi**
**Nasushiobara-shi**
**Tochigi 329-2763 (JP)**
• **CHEN, Yanzi**
**Nasushiobara-shi**
**Tochigi 329-2763 (JP)**
• **KANEKO, Kei**
**Nasushiobara-shi**
**Tochigi 329-2763 (JP)**

(74) Representative: **Prüfer & Partner mbB**
**Patentanwälte · Rechtsanwälte**
**Sohnckestraße 12**
**81479 München (DE)**

(54) **POLYOLEFIN MICROPOROUS FILM AND LAMINATED POLYOLEFIN MICROPOROUS FILM**

(57)     The present invention aims to provide a polyolefin microporous membrane suitable for use as a separator for batteries required to have a high energy density and having excellent shutdown and meltdown properties and high impact resistance and cycling characteristics. The polyolefin microporous membrane is mainly composed of a polyolefin, wherein in a differential molecular weight distribution curve obtained by gel permeation chromatography (GPC) of the polyolefin microporous membrane, the percentage area of polymers with a molecular weight of 30,000 or less is not more than 10% and the percentage area of polymers with a molecular weight of not less than 500,000 and not more than 1,500,000 is not less than 25%, and wherein Raman spectroscopy indicates that the polyolefin microporous membrane has an orientation ratio of less than 0.8.

EP 4 265 404 A1

**Description**

Technical Field

The present invention relates to a polyolefin microporous membrane suitable for use as a battery separator.

Background Art

Polyolefin microporous membrane is widely used as a battery separator, and a polyolefin microporous membrane between a cathode and an anode can prevent short circuit due to contact between active materials on both the electrodes and allow the formation of an ionic conduction path by an electrolyte solution confined in micropores. From the viewpoint of battery safety and battery performance, separators are required to have excellent shutdown property, meltdown property, permeability, mechanical properties, impedance properties and the like. Furthermore, a recent concern is that the compression of a separator due to increased electrode volume in a higher-energy-density battery and gas generation will result in reduced permeability, which in turn will affect battery performance, particularly impact resistance and cycling characteristics.

Patent Literature 1 discloses that increasing the draw ratio results in higher strength and compression resistance, which helps to improve the self-discharge performance when it comes to a battery.

Patent Literature 2 discloses that the dispersion of microparticles having a particle size of 0.5 $\mu$m to 4 $\mu$m in a polyolefin microporous membrane results in better compression resistance and permeability, and that a battery comprising such a polyolefin microporous membrane has a higher capacity, and improved cycling characteristics and safety.

Patent Literature 3 discloses that deterioration of battery characteristics due to reduction of separator permeability caused by heat pressing during the battery manufacturing process can be prevented in a polyolefin multilayer microporous membrane by allowing a higher amount of polypropylene to be present in a surface layer(s) than in an inner layer(s) and by limiting the content of polymers with a molecular weight of not more than 30,000 to not more than 3.0%.

Patent Literature 4 discloses that the strength and permeability of a gel-like sheet having a crystallization rate $t_{1/2}$ of 10 minutes to 35 minutes are increased by stretching the gel-like sheet in both the machine direction (MD) and the transverse direction (TD).

Citation List

Patent Literature

    Patent Literature 1: WO 2018/164056
    Patent Literature 2: JP 2004-161899 A
    Patent Literature 3: WO 2019/074122
    Patent Literature 4: WO 2015/182691

Summary of Invention

Technical Problem

In recent years, there has been ongoing research and development to increase the capacity of batteries by increasing the amount of silicon in an anode. The anode becomes more likely to expand due to the increased silicon content, and the expanded anode places compressive stress on a separator, and the separator consequently reduces the permeability to permeants, which is considered as a problem. Therefore, the separator is required to have a higher compression resistance. However, the conventional technologies described in Patent Literature 1 to Patent Literature 4 are not able to provide sufficient compression resistance for the separators, and it is also difficult to provide both the properties related to battery safety, that is, the low-temperature shutdown property, which refers to shutdown at a temperature as low as possible, and the high-temperature meltdown property, which refers to meltdown at a temperature as high as possible.

The present invention provides a polyolefin microporous membrane suitable for use as a battery separator and having excellent compression resistance and both low-temperature shutdown and high-temperature meltdown properties.

Solution to Problem

The inventors intensively studied to solve the above problems and consequently found that the formation of a dense three-dimensional fibril network results in a polyolefin microporous membrane having a fine microporous structure, which results in the polyolefin microporous membrane having excellent pin puncture strength and higher compression resistance, shutdown property, and meltdown property, and finally completed the present invention.

The present invention includes the following items. That is, a polyolefin microporous membrane according to the present invention has characteristics of (1) to (9) below.

(1) A polyolefin microporous membrane mainly composed of a polyolefin resin, wherein in a differential molecular weight distribution curve obtained by gel permeation chromatography (GPC) of the polyolefin microporous membrane, the percentage area of polymers with a molecular weight of 30,000 or less is not more than 10% and the percentage area of polymers with a molecular weight of not less than 500,000 and not more than 1,500,000 is not less than 25%, and wherein Raman spectroscopy indicates that the polyolefin microporous membrane has an orientation ratio of less than 0.8.

(2) The polyolefin microporous membrane according to (1), wherein in a curve of heat flow versus temperature obtained by differential scanning calorimetry (DSC) of the polyolefin microporous membrane, the value of $\Delta H$ calculated by the formula below is not less than 0.2, where $\Delta H1$ represents the endothermic heat of fusion in the temperature range of 0 to 157°C during the first run, and $\Delta H2$ represents the endothermic heat of fusion in the temperature range of 0 to 157°C during the second run:

$$\Delta H = (\Delta H1 - \Delta H2) / \Delta H2.$$

(3) The polyolefin microporous membrane according to (1) or (2), wherein in the curve of heat flow versus temperature obtained by differential scanning calorimetry (DSC), one of endothermic peaks is observed at a temperature of not lower than 160°C.

(4) The polyolefin microporous membrane according to any of (1) to (3), wherein the polyolefin microporous membrane comprises two or more layers, each mainly composed of a polyolefin resin.

(5) The polyolefin microporous membrane according to any of (1) to (4), wherein the standard deviation of the percentage change in membrane thickness after hot compression is less than 1%.

(6) The polyolefin microporous membrane according to any of (1) to (5), wherein the percentage change in membrane thickness after hot compression is less than 10%.

(7) The polyolefin microporous membrane according to any of (1) to (6), wherein the polyolefin microporous membrane with a thickness of 7 $\mu$m and a porosity of 40% is calculated to have a pin puncture strength of not less than 294 cN.

(8) The polyolefin microporous membrane according to any of (1) to (7), wherein the polyolefin microporous membrane has a shutdown temperature of not higher than 140°C and a meltdown temperature of not lower than 165°C.

(9) A laminated polyolefin microporous membrane, comprising the polyolefin microporous membrane according to any of (1) to (8) and further one or more coating layers provided on at least one surface thereof.

Advantageous Effects of Invention

The present invention can provide a polyolefin multilayer microporous membrane suitable for use as a battery separator and having excellent compression resistance and both low-temperature shutdown and high-temperature meltdown properties.

Description of Embodiments

Embodiments of the present invention will be described below. However, the description is not to be construed as limiting the present invention to the embodiments below.

A polyolefin microporous membrane according to the present invention is mainly composed of a polyolefin resin, wherein in a differential molecular weight distribution curve obtained by gel permeation chromatography (GPC) of the polyolefin microporous membrane, the percentage area of polymers with a molecular weight of 30,000 or less is not more than 10% and the percentage area of polymers with a molecular weight of not less than 500,000 and not more than 1,500,000 is not less than 25%, and wherein Raman spectroscopy indicates that the polyolefin microporous membrane has an orientation ratio of less than 0.8.

In another aspect, the polyolefin microporous membrane of the invention can comprise two or more layers, each mainly composed of two or more polyolefins. In this case, the microporous membrane comprising laminated layers, each mainly composed of polyolefin, can be seen as a single microporous membrane.

The polyolefin microporous membrane will be described below.

The polyolefin microporous membrane of the invention is mainly composed of a polyolefin resin, wherein in a differential molecular weight distribution curve obtained by gel permeation chromatography (GPC) of the polyolefin microporous membrane, the percentage area of polymers with a molecular weight of 30,000 or less is not more than 10% and the percentage area of polymers with a molecular weight of not less than 500,000 and not more than 1,500,000 is not less than 25%, relative to the entire area of a region enclosed by the distribution curve and a baseline, which is taken as 100%, and wherein Raman spectroscopy indicates that the polyolefin microporous membrane has an orientation ratio of less than 0.8. As used herein, the phrase "mainly composed of a polyolefin resin" means that the polyolefin microporous membrane preferably comprises the polyolefin resin at a concentration of not less than 90% by mass, more preferably not less than 95% by mass, and still more preferably not less than 98% by mass when the mass of the polyolefin microporous membrane is taken as 100% by mass. This allows the formation of a dense three-dimensional fine fibril network of the polyolefin resin, which in turn causes the formation of a fine microporous structure and increases the resistance to impact or stress applied perpendicularly to the film surface.

In cases where the percentage area of polymers with a molecular weight of 30,000 or less is more than 10%, or where the percentage area of polymers with a molecular weight of not less than 500,000 and not more than 1,500,000 is less than 25%, a coarse fibril network is formed, which causes difficulty in formation of a fine microporous structure and reduces the in-plane homogeneity of the fibril structure, resulting in lower compression resistance. Additionally, in cases where the orientation ratio measured by Raman spectroscopy is not less than 0.8, the crystalline molecular chain orientation is reduced, which causes difficulty in formation of a fine microporous structure, resulting in lower compression resistance.

The percentage area of polymers with a molecular weight of 30,000 or less is not more than 10%, preferably not more than 8%, and more preferably not more than 6%, and the lower limit percentage is preferably not less than 5%. A good shutdown property can be obtained by limiting the percentage area to the above range.

The percentage area of polymers with a molecular weight of not less than 500,000 and not more than 1,500,000 is not less than 25%, preferably not less than 27%, and more preferably not less than 30%, and the upper limit percentage is preferably not more than 40%. The stress applied during stretching and the residual stress after heat treatment are uniformly distributed by limiting the percentage area to the above range, allowing the formation of a fine microporous structure.

The percentage areas can be conveniently adjusted to the above ranges of percentage areas by modifying the weight average molecular weights (Mw), molecular weight distributions (Mw/Mn), and contents of a polyethylene and a polypropylene, which are used as the polyolefin and will be described below. In addition, the percentage areas can be determined by gel permeation chromatography (GPC) and are specifically values determined by a measurement method described in Examples. Moreover, in the case of a microporous membrane composed of multiple layers, the percentage areas can be further adjusted by modifying the thickness of each layer or the ratio of basis weight of the layers.

Additionally, the orientation ratio measured by Raman spectroscopy is less than 0.8 and preferably not more than 0.6, and the lower limit of the orientation ratio is preferably not less than 0.4. The orientation ratio in the above range indicates that the crystalline molecular chains are highly oriented, and such an orientation ratio allows the formation of a dense three-dimensional homogeneous fibril network of the polyolefin resin, which in turn causes the formation of a fine microporous structure and increases the resistance to impact or stress applied perpendicularly to the film surface, resulting in good compression resistance. In cases where the orientation ratio measured by Raman spectroscopy is not less than 0.4, the polyolefin microporous membrane can have excellent heat shrinkage and shutdown property and form a fine microporous structure. In this specification, MD refers to machine direction, and TD refers to transverse direction.

The orientation ratio measured by Raman spectroscopy can be adjusted to the above range of orientation ratio by appropriately modifying the first stretching process, the second stretching process, and the heat treatment process, which processes will be described below. In addition, the orientation ratio measured by Raman spectroscopy can be determined by microscopic Raman spectroscopy and is specifically a value determined by a measurement method described in Examples.

In a curve of heat flow versus temperature obtained by differential scanning calorimetry (DSC) of the polyolefin microporous membrane of the invention, the value of $\Delta H$ calculated by the formula below is preferably not less than 0.2, where $\Delta H1$ represents the endothermic heat of fusion in the temperature range of 0 to 157°C during the first run, $\Delta H2$ represents the endothermic heat of fusion in the temperature range of 0 to 157°C during the second run. The value of $\Delta H$ in the above range indicates that the crystalline molecular chains are highly oriented, which increases the resistance to impact or stress applied perpendicularly to the film surface, resulting in high compression resistance.

$$\Delta H = (\Delta H1 - \Delta H2) / \Delta H2$$

The amount of heat absorbed by the polyolefin microporous membrane can be adjusted to the above range of heat flow by appropriately modifying the second stretching process and the heat treatment process, which processes will be described below. In addition, the amount of absorbed heat is specifically determined by a measurement method described in Examples.

In the curve of heat flow versus temperature obtained by differential scanning calorimetry (DSC) of the polyolefin microporous membrane of the invention, one of endothermic peaks is preferably observed at a temperature of not lower than 160°C, which allows the meltdown property to be imparted to the polyolefin microporous membrane. The endothermic peak is preferably at a temperature of not lower than 163°C, and the upper limit of the endothermic peak is preferably at a temperature of not higher than 170°C. The polyolefin microporous membrane of the invention can retain its shape at high temperatures when the endothermic peak is observed at a temperature in the above range. The endothermic peak can be adjusted to the above range of temperature by using polypropylene as the polyolefin resin and modifying the Mw, content, and melting point of the polypropylene, the ratio of constituent layers, and the like. In addition, the endothermic peak temperature can be determined by differential scanning calorimetry and is specifically a value determined by a measurement method described in Examples.

The polyolefin microporous membrane of the invention may comprise two or more polyolefin resin layers. Each layer may be composed of a polyolefin resin with a different composition; for example, the polyolefin microporous membrane of the invention may comprise three or more layers, each of which is either of two different polyolefin resin layers (these layers are denoted by "Layer A" and "Layer B" for the sake of convenience). The order of layering is not limited to a particular order but may be Layer A/Layer B/Layer A or Layer B/Layer A/Layer B.

For the polyolefin microporous membrane of the invention, the standard deviation of the percentage change in membrane thickness after hot compression at a temperature of 70°C and a pressure of 7.8 MPa for 10 seconds (hereinafter also referred to as "the percentage change in membrane thickness after hot compression") is preferred to be less than 1%. The standard deviation of the percentage change in membrane thickness after hot compression is preferably not more than 0.7% and more preferably not more than 0.6%. A smaller standard deviation of the percentage change in membrane thickness after hot compression means a smaller structural variation in the microporous membrane. Thus, the compression resistance will be improved by limiting the standard deviation to the preferred range. The standard deviation of the percentage change in membrane thickness after hot compression can be adjusted to the above range of standard deviation by appropriately modifying the Mw, Mw/Mn, and content of polyethylene, which polyethylene will be described below, and the first stretching process, the second stretching process, and the like. In addition, the standard deviation of the percentage change in membrane thickness after hot compression can be specifically determined by a measurement method described in Examples.

For the polyolefin microporous membrane of the invention, the percentage change in membrane thickness after hot compression at a temperature of 70°C and a pressure of 7.8 MPa for 10 seconds is preferably less than 10%, more preferably not more than 8%, still more preferably not more than 7%, relative to the membrane thickness before the hot compression, which is taken as 100%. When the percentage change in membrane thickness is limited to the preferred range, the polyolefin microporous membrane, when used as a battery separator, can withstand the expansion of the electrodes and exert proper functions of the separator even after repeated use, and the impact resistance and the cycling characteristics are consequently improved. The percentage change in membrane thickness after hot compression can be adjusted to the above range of percentage change in membrane thickness by appropriately modifying the Mw, Mw/Mn, and content of polyethylene, which polyethylene will be described below, and the first stretching process, the second stretching process, and the like. The percentage change in membrane thickness after hot compression can be determined by calculating the percentage change between the thickness of the membrane before hot compression, which is taken as 100%, and the thickness of the membrane after hot compression and is specifically a value determined by a measurement method described in Examples.

Preferably, the polyolefin microporous membrane of the invention with a thickness of 7 $\mu$m and a porosity of 40% is calculated to have a pin puncture strength of not less than 294 cN. The calculated pin puncture strength is preferably not less than 314 cN and more preferably not less than 343 cN. When the pin puncture strength is limited to the preferred range, the polyolefin microporous membrane will have a higher resistance to impact or stress applied perpendicularly to the film surface and consequently have a higher compression resistance, and the impact resistance and the cycling characteristics are consequently excellent in cases where the polyolefin microporous membrane is used as a battery separator. The pin puncture strength can be adjusted to the above range of pin puncture strength by appropriately modifying the Mw, Mw/Mn, and content of polyethylene, which polyethylene will be described below, and the ratio of constituent layers, the first stretching process, the second stretching process, and the like. In addition, the calculated pin puncture strength can be specifically determined by a measurement method described in Examples.

Preferably, the polyolefin microporous membrane of the invention has a shutdown temperature of not higher than 140°C and a meltdown temperature of not lower than 165°C. In cases where the shutdown and meltdown temperatures are within the above ranges, the polyolefin microporous membrane will provide greater safety when used as a battery separator. The shutdown temperature is more preferably not higher than 138°C and still more preferably not higher than 136°C. The lower limit of the shutdown temperature is not limited to a specific temperature but is preferred to be not lower than 125°C because a reduction in ion permeability can be reduced at a temperature of not lower than 125°C. The meltdown temperature is more preferably not lower than 170°C and still more preferably not lower than 175°C. The upper limit of the meltdown temperature is not limited to a specific temperature but is preferred to be a temperature of not higher than 190°C. The shutdown and meltdown temperatures can be determined by measuring the air resistance during heating and is specifically a value determined by a measurement method described in Examples.

Hereinafter, the present invention will be more specifically described with reference to polyolefin microporous membranes in the Layer A/Layer B/Layer A configuration or the Layer B/Layer A/Layer B configuration.

(1) Polyolefin Resin Composition A

Polyethylene

Preferably, the Layer A is a porous membrane layer composed of a polyolefin resin composition comprising an ultra-high molecular weight polyethylene with a weight average molecular weight (Mw) of not less than $8.0 \times 10^5$ (hereinafter also referred to as "polyolefin resin composition A"). In this respect, the "ultra-high molecular weight polyethylene" refers to a polyethylene having a Mw of not less than $8.0 \times 10^5$. The ultra-high molecular weight polyethylene type may be a copolymer obtained by copolymerizing ethylene with a small amount of an alpha-olefin other than ethylene or may be a blend of polyethylene and a small amount of other alpha-olefin polymers. Preferably, an ultra-high molecular weight polyethylene homopolymer is used.

As the alpha-olefin other than ethylene, propylene, 1-butene, 1-pentene, 1-hexene, 4-methyl-1-pentene, 1-octene, vinyl acetate, methyl methacrylate, and styrene are preferred. The content of the alpha-olefin other than ethylene is preferably not more than 5% by mole relative to the polyolefin resin, which is taken as 100% by mole. The polyolefin resin is preferred to be a homopolymer of ethylene from the viewpoint of homogeneity of the microporous structure of the polyolefin microporous membrane.

The weight average molecular weight (Mw) of the ultra-high molecular weight polyethylene is preferably not less than $8.0 \times 10^5$ but less than $2.0 \times 10^6$ and more preferably not less than $1.0 \times 10^6$ and not more than $1.8 \times 10^6$.

The molecular weight distribution (Mw/Mn) of the ultra-high molecular weight polyethylene is preferably not more than 10 and more preferably not more than 5. The molecular weight distribution within the above range indicates that the range of molecular weights is narrow, or the molecular weights are distributed in a narrow range, and a smaller value indicates higher uniformity. In this respect, the Mw and the Mw/Mn are values determined by the GPC method described below.

The content of the ultra-high molecular weight polyethylene in the polyolefin resin composition A is preferably not less than 65% by mass, more preferably not less than 70% by mass, still more preferably not less than 80% by mass, relative to the polyolefin resin composition A, which is taken as 100% by mass.

The polyolefin resin composition of Layer A is preferably substantially free of any polyethylene other than an ultra-high molecular weight polyethylene but may comprise a polyethylene other than the ultra-high molecular weight polyethylene at a concentration of not less than 0% by mass and not more than 15% by mass relative to the total of the polyolefin resin composition of Layer A, which is taken as 100% by mass. The Mw of the polyethylene other than the ultra-high molecular weight polyethylene is preferably less than $3.0 \times 10^5$ and more preferably less than $2.0 \times 10^5$. Furthermore, the lower Mw limit of the polyethylene other than the ultra-high molecular weight polyethylene is preferred to be not less than $5.0 \times 10^4$ in view of the strength of the membrane. Preferably, the polyethylene other than the ultra-high molecular weight polyethylene is at least one polyethylene selected from the group consisting of a high-density polyethylene, a medium-density polyethylene, a branched low-density polyethylene, and a linear low-density polyethylene.

Polypropylene

Preferably, the polyolefin resin composition A comprises polypropylene. The polypropylene is not limited to a specific type but may be a homopolymer of propylene, a copolymer of propylene with another alpha-olefin and/or a diolefin (propylene copolymer), or a mixture of two or more selected from the polymers, and it is more preferred that a homopolymer of propylene be used alone.

Either a random copolymer or a block copolymer may be used as the propylene copolymer. An alpha-olefin containing 8 or less carbon atoms is preferred as the alpha-olefin in the propylene copolymer. Examples of the alpha-olefin containing 8 or less carbon atoms include ethylene, 1-butene, 1-pentene, 4-methyl-1-pentene, 1-octene, vinyl acetate, methyl methacrylate , styrene, and a combination thereof. As the diolefin in the propylene copolymer, a diolefin containing 4 to 14 carbon atoms is preferred. Examples of the diolefin containing 4 to 14 carbon atoms include butadiene, 1,5-hexadiene, 1,7-octadiene, and 1,9-decadiene. The content of said another alpha-olefin or the diolefin in the propylene copolymer is less than 10% by mole relative to the propylene copolymer, which is taken as 100% by mole.

The weight average molecular weight (Mw) of the polypropylene is preferably not less than $1 \times 10^6$, more preferably not less than $1.2 \times 10^6$, and especially preferably in the range of $1.2 \times 10^6$ to $4 \times 10^6$. Additionally, the melting point of the polypropylene is preferably in the range of 155°C to 170°C and more preferably in the range of 160°C to 165°C. In this respect, the melting point is a value determined by the differential scanning calorimetry (DSC) described below.

The content of the polypropylene in the polyolefin resin composition A is preferably not less than 10% by mass and not more than 30% by mass, more preferably not less than 10% by mass and not more than 20% by mass, relative to the polyolefin resin composition A, which is taken as 100% by mass.

(2) Polyolefin Resin Composition B

Polyethylene

Preferably, the Layer B is a porous layer composed of a polyolefin resin composition comprising an ultra-high molecular weight polyethylene with a weight average molecular weight (Mw) of not less than $8.0 \times 10^5$ (hereinafter also referred to as "polyolefin resin composition B"). The type, Mw, Mw/Mn, and content of the ultra-high molecular weight polyethylene in the polyolefin resin composition B are the same as those of the ultra-high molecular weight polyethylene described in the above section "Polyolefin Resin Composition A" and are therefore not be described here.

Preferably, the polyolefin resin composition B comprises a polyethylene in addition to the ultra-high molecular weight polyethylene with a weight average molecular weight (Mw) of not less than $8.0 \times 10^5$. The content of the polyethylene other than the ultra-high molecular weight polyethylene is preferably not less than 10% by mass and not more than 30% by mass, more preferably not less than 10% by mass and not more than 20% by mass, relative to the polyolefin resin composition B, which is taken as 100% by mass. The Mw and type of the polyethylene other than the ultra-high molecular weight polyethylene in the polyolefin resin composition B are the same as those of the polyethylene other than the ultra-high molecular weight polyethylene described in the above section "Polyolefin Resin Composition A" and are therefore not be described here.

Polypropylene

The polyolefin resin composition B is preferably substantially free of any polypropylene but may comprise polypropylene at a concentration of not less than 0% by mass and not more than 15% by mass relative to the polyolefin resin composition B, which is taken as 100% by mass. The type, Mw, and melting point of the polypropylene are the same as those of the polypropylene described in the above section "Polyolefin Resin Composition A" and are therefore not be described here.

In a differential molecular weight distribution curve obtained by GPC, the percentage areas of polymers with a molecular weight of 30,000 or less and of polymers with a molecular weight of not less than 500,000 and not more than 1,500,000 are likely to be limited to a percentage of not more than 10% and a percentage of not less than 25%, respectively, by appropriately adjusting the ultra-high molecular weight polyethylenes in the polyolefin resin composition A and the polyolefin resin composition B, the polyethylene other than the ultra-high molecular weight polyethylenes, and the polypropylenes in the preferred ranges, which allows the formation of a dense three-dimensional homogeneous fibril network of the polyolefin resin, and thus a polyolefin microporous membrane having a fine microporous structure is likely to be produced. Furthermore, one of the endothermic peaks obtained by DSC is likely to be observed at a temperature of not lower than 160°C, and a polyolefin microporous membrane with shape retention property at high temperatures is therefore likely to be produced. Consequently, a polyolefin microporous membrane is obtained, in which the standard deviation of the percentage change in membrane thickness after hot compression is small, the percentage change in membrane thickness after hot compression is satisfactory, and wherein the polyolefin microporous membrane has both low-temperature shutdown and high-temperature meltdown properties.

The thicknesses of the layers of the polyolefin microporous membrane are expressed as a ratio between Layer A and Layer B, and the ratio is preferably in the range of 10/90 to 40/60 and more preferably in the range of 20/80 to 30/70. It is to be noted that in cases where multiple layers are included as either Layer A or Layer B, the sum of the thicknesses of the layers is determined as the thickness of Layer A or Layer B.

Although a microporous membrane comprising two different layers, Layer A and Layer B, is described in the example described above, a microporous membrane may, of course, comprise three or more different layers.

(3) Production Method for Polyolefin Microporous Membrane

Hereinafter, a method of producing a polyolefin microporous membrane of the invention will be described with reference to polyolefin microporous membranes in the Layer A/Layer B/Layer A configuration or the Layer B/Layer A/Layer B configuration. For example, the method of producing a polyolefin microporous membrane comprises the following steps:

(a) Preparation of Solutions for Making Layer A and Layer B
(b) Formation of a Gel-like Multilayer Sheet
(c) First Stretching
(d) Removal of Plasticizer
(e) Drying
(f) Second Stretching
(g) Heat Treatment.

(a) Preparation of Solutions for Making Layer A and Layer B

In a twin-screw extruder, a plasticizer is added to a polyolefin resin composition, and the polyolefin resin composition is melt-blended with the plasticizer to prepare a solution for making Layer A and Layer B, respectively. For the blending ratio of the polyolefin resin composition for Layer A or Layer B with the plasticizer, the content of the polyolefin resin composition is preferably not less than 20% by mass and not more than 30% by mass relative to the total of the polyolefin resin composition and the plasticizer, which is taken as 100% by mass. Die swelling or necking can be prevented by limiting the concentrations of the polyolefin resin compositions to the above range when each of the polyolefin solutions is extruded from a die, thereby making the moldability and self-supporting property of an extrudate good.

Any plasticizer can be used as the plasticizer without specific limitations, provided that the plasticizer is a nonvolatile solvent that can be mixed with a polyolefin resin to form a homogeneous solution at a temperature equal to or above the melting point of the polyolefin resin. Examples of the plasticizer can include hydrocarbons, such as liquid paraffin and paraffin wax, and esters, such as dioctyl phthalate and dibutyl phthalate.

The solutions for making Layers A and B are fed from the extruders to one die, and both the solutions are extruded into layered sheets, and an extrudate is thus obtained. Either the flat die method or the inflation method may be used as a method for the extrusion. In either of the methods, a method comprising feeding the solutions to different manifolds and accumulating layers of the solutions at the lip entrance of a multilayer die (multi-manifold method) or a method comprising merging streams of the solutions into a laminar flow before feeding the resulting laminar flow to a die (block method) may be used. A normal method can be used as the multi-manifold method or the block method. The gap of the multilayer flat die can be not less than 0.1 mm and not more than 5 mm. Preferably, the extrusion temperature is not lower than 140°C and not higher than 250°C, and the extrusion rate is in the range of 0.2 m/min to 15 m/min. The film thickness ratio of the layers can be adjusted by modifying the extrusion rates of the solutions for the layers.

(b) Formation of a Gel-like Multilayer Sheet

The obtained extrudate is cooled down to form a gel-like multilayer sheet. The microphase separation of the polyolefin in the membrane-forming solvent can be stabilized by the cooling process. When the cooling rate is within the above range, the degree of crystallization is maintained within an appropriate range, and a gel-like sheet ready for stretching is formed. As a method for the cooling, a method comprising contact with a coolant such as cooled air or cooled water, a method comprising contact with a chill roll, and the like can be used, and a cooling method comprising contact with a chill roll cooled with a coolant is preferred. Preferably, the extrudate is cooled to at least the gelation temperature at a rate of not less than 50°C/min. It is preferred that the extrudate be cooled down to a temperature of not higher than 25°C. The microphase separation of the first and second polyolefins in the membrane-forming solvents can be stabilized by the cooling process. When the cooling rate is within the above range, the degree of crystallization is maintained within an appropriate range, and a gel-like multilayer sheet ready for stretching is formed.

(c) First Stretching

Next, the gel-like sheet is stretched. The process of stretching the gel-like sheet is also called the wet stretch. The gel-like sheet comprises the solvent and can be therefore uniformly stretched. Preferably, the gel-like sheet is heated and then stretched to a predetermined draw ratio by tenter method, rolling method, inflation method, or combination thereof. The stretching may be uniaxial stretching or biaxial stretching and is preferred to be biaxial stretching. In the case of biaxial stretching, any of simultaneous biaxial stretching, stepwise stretching, and multistage stretching (for example, a combination of simultaneous biaxial stretching and stepwise stretching) may be performed.

The stretching magnification (planar stretch ratio) is preferably not less than 2 and more preferably not less than 3 and not more than 30 in the case of uniaxial stretching, while the stretching magnification (planar stretch ratio) is preferably not less than 9, more preferably not less than 16, and especially preferably not less than 25 in the case of biaxial stretching. Additionally, the stretching magnification is preferably not less than 3 in both MD or TD, and the stretching magnifications in MD and TD may be identical or different from each other. In this respect, the stretching magnification in this step refers to the ratio of the area of the stretched microporous membrane prior to the following step to the area of the microporous membrane prior to this step.

The lower limit of the temperature during the stretching process is preferably not lower than 90°C and more preferably not lower than 110°C. Additionally, the upper limit of the stretching temperature is preferably not higher than 120°C. When the stretching temperature is limited to the above range, it prevents the gel-like sheet from rupture caused by stretching a polyolefin resin component with a low melting point, and the gel-like sheet can be stretched to a high stretching magnification.

(d) Removal of Plasticizer

A washing solvent is used to remove the plasticizers. Washing solvents and a method of using a washing solvent for plasticizer removal are known and will not be described here. For example, the methods disclosed in JP 2132327 B and JP 2002-256099 A can be used.

(e) Drying

The polyolefin microporous membrane with the plasticizers removed is dried by the heat-drying method or the air-drying method. Any method, including conventional methods such as the heat-drying method and the air-drying method, may be used, provided that the washing solvent can be removed by the method. Processing conditions for removal of volatile substances, such as the washing solvent, may be the same as those disclosed in, for example, WO 2008/016174 and WO 2007/132942.

(f) Second Stretching

Next, the dried polyolefin microporous membrane is stretched. The stretch of the dried microporous membrane is called the second stretch. The dried microporous membrane film is at least uniaxially stretched. The second stretch can be performed on the polyolefin microporous membrane with heating by tenter method or the like, similarly to the above description. In the present application, two different polyolefin resins, polyethylene and polypropylene, are included in the same layer, and it is therefore preferred that the second stretch to be uniaxial stretching, in view of establishing a uniform lamellar structure.

The draw ratio is preferably not less than 1.5, more preferably not less than 2.0, in either MD or TD. The second stretch with a draw ratio of not less than 1.5 makes crystalline molecular chains highly oriented in MD or TD, which can adjust the orientation ratio measured by Raman spectroscopy to less than 0.8. The orientation ratio measured by Raman spectroscopy can be adjusted to a smaller value by stretching the membrane to a higher draw ratio. However, since the shutdown temperature and the heat shrinkage increase as the draw ratio increases, and it is preferable that the upper limit of the draw ratio be 3.5, taking into account the balance with the shutdown temperature and the heat shrinkage. In this respect, the draw ratio in the second stretch refers to the ratio of the length of the polyolefin microporous membrane in MD or TD after the second stretch to the length of the polyolefin microporous membrane in MD or TD before the second stretch.

(g) Heat Treatment

Preferably, the polyolefin microporous membrane is heat-treated after the second stretch. For example, the polyolefin microporous membrane is heat-treated while held in place by clips in the transverse direction (TD thermal fixation process). The heat treatment is preferably performed at a temperature of not lower than 115°C and not higher than 135°C.

The orientation ratio measured by Raman spectroscopy can be adjusted to less than 0.8 by appropriately modifying the polyolefin resin compositions, the first stretching process, the second stretching process, and the heat treatment process in the preferred ranges, which allows the formation of a dense three-dimensional homogeneous fibril network of the polyolefin resin, and thus a polyolefin microporous membrane having a fine microporous structure is likely to be produced. Consequently, a polyolefin microporous membrane is obtained, in which the standard deviation of the percentage change in membrane thickness after hot compression is small, the percentage change in membrane thickness after hot compression is satisfactory, and wherein the polyolefin microporous membrane has the low-temperature shutdown property.

Moreover, another porous layer may be placed on one or both surfaces of the polyolefin microporous membrane of the invention to produce a laminated polyolefin porous membrane. Said another porous layer is not specifically limited but can be, for example, an inorganic particle layer comprising a binder and inorganic particles. The binder component used in the inorganic particle layer is not specifically limited, but a known material, such as an acrylic resin, a polyvinylidene fluoride resin, a polyamide-imide resin, a polyamide resin, an aromatic polyamide resin, a polyimide resin, or the like, can be used. The inorganic particles as a component of the inorganic particle layer are not specifically limited, but a known material, such as alumina, boehmite, barium sulfate, magnesium oxide, magnesium hydroxide, magnesium carbonate, silicon, or the like, can be used.

Examples

The present invention will be described below in more detail with reference to examples. However, the description is not to be construed as limiting the present invention to the examples.

[Measuring Methods]

(1) Film thickness

The thickness was measured at five positions within an area of 95 mm $\times$ 95 mm in a polyolefin microporous membrane by using a contact-type thickness gauge (LITEMATIC; contact pressure: 0.01 N; equipped with a probe of 10.5 mm in diameter; manufactured by Mitutoyo Corporation), and the mean value of the measured values was defined as the film thickness ($\mu$m) of the polyolefin microporous membrane.

(2) Porosity

A polyolefin microporous membrane was cut into a size of 95 mm $\times$ 95 mm, and the volume ($cm^3$) and weight (g) determined for the cut piece were used together with the membrane density ($g/cm^3$) of the polyolefin microporous membrane for the calculation using the following formula:

$$\text{Formula: Porosity (\%)} = [(\text{volume - weight/membrane density}) / \text{volume}] \times 100.$$

In this respect, the membrane density was 0.99 ($g/cm^3$). Additionally, the film thickness determined in the above section (1) was used for the calculation of the volume.

(3) Air resistance

The air resistance (sec/100 $cm^3$) of a polyolefin microporous membrane was measured by using an air resistance tester (EGO-1T; manufactured by Asahi Seiko Co., Ltd.) in accordance with JIS P-8117: 2009.

(4) Pin puncture strength

A polyolefin microporous membrane with a film thickness of T ($\mu$m) and a porosity of P (%) was pierced with a pin having a diameter of 1 mm (a radius of curvature R of 0.5 mm at the top) and moving at a speed of 2 mm/sec, and the maximum load S (cN) was measured. Then, the pin puncture strength calculated for the film thickness of 7 $\mu$m and the porosity of 40% was determined from the following formula:

$$\text{Formula: Calculated pin puncture strength (cN)} = \{S \times 7 \times 60\} / \{T \times (100 - P)\}.$$

(5) Percentage change in membrane thickness after hot compression

A polyolefin microporous membrane was cut into 25 pieces with a size of 40 mm $\times$ 40 mm at positions equally spaced in TD, and the thickness was measured at five positions of every piece, and the average thickness was calculated. Then, five of the cut samples were layered together, and the resulting sample was placed between horizontal plates and hot-compressed at 70°C for 10 seconds under a pressure of 7.8 MPa by a pressing machine (CYPT-20 Special; manufactured by SINTOKOGIO, Ltd.). Three hours after the polyolefin microporous membrane was released from the hot compression, the thickness was measured at five positions of every piece, and the mean value (average thickness) was determined for the calculation using the following formula:

Formula: Percentage change in membrane thickness after hot compression (%) =

[(average thickness before hot compression - average thickness after release from hot

compression) / (average thickness before hot compression)] × 100.

In this respect, the thickness was measured according to the method described in the above section (1).

(6) Standard deviation

A standard deviation was calculated from the results of measuring the percentage change in membrane thickness after hot compression of the 25 pieces determined in the above section (5).

(7) Shutdown temperature and meltdown temperature

A polyolefin microporous membrane was exposed to an atmosphere at 30°C with heating at a rate of 5°C/min to measure the air resistance. The temperature at which the air resistance reached 100,000 seconds/100 cm$^3$ was determined as the shutdown temperature of the polyolefin microporous membrane. After the temperature reached the shutdown temperature, the polyolefin microporous membrane was further heated, and the temperature at which the air resistance decreased to less than 100,000 seconds/100 cm$^3$ was determined as the meltdown temperature. The air resistance was measured by using an air resistance tester (EGO-1T; manufactured by Asahi Seiko Co., Ltd.) in accordance with JIS P8117: 2009.

(8) Melting point, endothermic peak, and endothermic heat of fusion

The melting point of a polyolefin resin and the endothermic peak of a polyolefin microporous membrane were measured with a differential scanning calorimeter (Pyris Diamond DSC; manufactured by PerkinElmer Inc.). The polyolefin resin or the polyolefin microporous membrane was placed in a sample holder and heated to 230°C at a heating rate of 10°C/min under nitrogen atmosphere (20 mL/min) until completely melted, and the temperature was held at 230°C for 3 minutes and then decreased to 30°C at a rate of 10°C/min (first run). After the temperature decrease, the polyolefin resin or the polyolefin microporous membrane was reheated to 230°C at a heating rate of 10°C/min under nitrogen atmosphere (20 mL/min) until completely melted, and the temperature was held at 230°C for 3 minutes and then decreased to 30°C at a rate of 10°C/min (second run). The lines passing through the points on the obtained DSC curves at 0°C and 157°C were used as baselines, and the melting point (Tm) of the polyolefin resin and the endothermic peak of the polyolefin microporous membrane temperature were determined from the curve of heat flow versus temperature obtained in the second run. Additionally, the value of ΔH was calculated by the formula below, where ΔH1 represents the endothermic heat of fusion during the first run and ΔH2 represents the endothermic heat of fusion during the second run. For the polyolefin resin, a peak with an endothermic heat of fusion of not less than 70 J/g was determined as the endothermic peak; for the polyolefin microporous membrane, a peak with an endothermic heat of fusion of not less than 3.0 J/g was determined as the endothermic peak.

$$\Delta H = (\Delta H1 - \Delta H2) / \Delta H2$$

(9) Weight average molecular weight, molecular weight distribution, and area under the peak of differential molecular weight distribution curve

The weight average molecular weight (Mw) and molecular weight distribution (Mw/Mn) of a polyolefin resin were determined by gel permeation chromatography (GPC) under the measurement conditions below. Additionally, a differential molecular weight distribution curve of a polyolefin microporous membrane was determined by the procedures below.

(A) The intensity measured by a refractive index detector (RI detector) in the GPC was plotted against the elution time to obtain an elution curve, and the elution time was converted to molecular weight. In this respect, a baseline was drawn between the retention times corresponding to the leading and trailing edges of a peak in the elution curve, where the peak was detected within a time interval of 0.017 minute.

(B) The area under the elution curve was calculated for the intensity to determine the concentration ratio of each component with a certain molecular weight, where the whole area under the elution curve was taken as 100%. The concentration ratios were sequentially integrated, and an integral molecular weight curve was obtained by plotting the logarithm of the molecular weight (log(M)) on the horizontal axis and the integral value of the concentration ratio (w) on the vertical axis.

(C) The derivative of the curve with respect to the logarithm of the molecular weight was calculated, and a differential molecular weight distribution curve was obtained by plotting the logarithm of the molecular weight (log(M)) on the horizontal axis and the derivative of the concentration ratio with respect to the logarithm of the molecular weight (dw/dlog(M)) on the vertical axis. The percentage area of polymers with a molecular weight of 30,000 or less and the percentage area of polymers with a molecular weight of not less than 500,000 and not more than 1,500,000 were calculated relative to the area of a region enclosed by the obtained differential molecular weight distribution curve and a baseline (the horizontal axis in normal cases), which was taken as 100%. In this respect, the area of each region is calculated as an actual area from the graph of the differential molecular weight distribution curve.

Measurement conditions:

- Measuring apparatus: PL-GPC220 high-temperature GPC system (manufactured by Agilent, Inc.)
- Column: PL1110-6200 (20 $\mu$m; MIXED-A) manufactured by Agilent, Inc. $\times$ 2
- Column temperature: 160°C
- Solvent (mobile phase): 1,2,4-trichlorobenzene
- Solvent flow rate: 1.0 mL/min
- Sample concentration: 0.1% by weight (dissolution conditions: 160°C/3.5 H)
- Injection volume: 500 $\mu$L
- Detector: refractive index detector (RI detector) manufactured by Agilent, Inc.
- Viscometer: a viscosity detector manufactured by Agilent, Inc.
- Standard curve: a standard curve generated by a universal standard curve method using a monodisperse polystyrene standard sample

(10) Orientation ratio measured by Raman spectroscopy

The polarized Raman spectrum of a polyolefin microporous membrane was measured as follows by a microscopic Raman spectroscope in Via (manufactured by Renishaw plc) to calculate the orientation ratio of crystalline molecular chains measured by Raman spectroscopy.

(A) Laser light passing through a polarizer with a single optical axis was made incident on a polyolefin microporous membrane sample, and the Raman scattered light was collected by an analyzer with the same optical axis as that of the polarizer. The ratio of Raman band intensities at 1130 cm$^{-1}$ and 1060 cm$^{-1}$ (11130/11060) was calculated from the obtained Raman spectrum. The Raman bands at 1130 cm$^{-1}$ and 1060 cm$^{-1}$ are attributed to the stretching vibration of C-C and to the reverse stretching vibration of C-C, respectively, in the polyolefin chain molecule in the crystalline phase, and the orientation of the Raman tensor for the vibrations is identical to the orientation of the molecular chain axis. Thus, the orientation of the molecular chain can be understood. A larger orientation value means higher crystalline molecular chain orientation.

(B) The measurement described in the above paragraph (A) was repeated each time the polyolefin microporous membrane on a sample stub was rotated 10 degrees. The orientation ratio measured by Raman spectroscopy was determined by the formula below, where Sa represents the ratio of Raman band intensities (I1130/I1060) in a specific direction, which is the largest among the ratios of Raman band intensities (11130/11060), and Sb represents the ratio of Raman band intensities (I1130/I1060) in the direction perpendicular to the specific direction.

$$\text{Orientation ratio measured by Raman spectroscopy} = Sb/Sa$$

(11) Analysis of monolayer or multilayer polyolefin microporous membrane

The identity of a polyolefin microporous membrane can be determined by focusing on a component(s) contained in a layer or layers and analyzing the distribution of the components in the thickness direction.

For example, a catalyst is used for polyolefin polymerization, and the distribution analysis can be performed by focusing on the catalyst remaining in a porous membrane. In this case, the surface of the microporous membrane is analyzed in the thickness direction (MD/ZD or TD/ZD) by secondary ion mass spectrometry (SIMS) to determine the concentration distribution of trace metal elements from the catalyst. In cases where the metal elements are uniformly distributed over the TD/ZD surface, the microporous membrane can be determined to comprise a single layer; in cases where the distribution of the metal elements varies along the surface or where the concentration distribution of the metal elements is observed, the microporous membrane can be determined to comprise multiple layers.

Measurement conditions:

· Sample preparation: a polyolefin microporous membrane is cut with an ultramicrotome to expose the TD/ZD surface.
· Measuring apparatus: NanoSIMS 50L (manufactured by CAMEKA)
· Vacuum degree: $1.33 \times 10^{-8}$ Pa
· Primary ion: $O^-$
· Primary ion acceleration voltage: 25 kV
· Secondary ion polarity: positive
· Secondary ion detection area: $300 \times 300$ $\mu m^2$

Moreover, another method comprises edging a polyolefin microporous membrane to separate the surface component from the inner membrane component and measuring the molecular weight distribution, melting point, and absorption spectrum of each component. In cases where the same results are observed in the surface and inner membrane components, the polyolefin microporous membrane can be determined to comprise a single layer; in cases where different results are observed between the surface and inner membrane components, the polyolefin microporous membrane can be determined to comprise multiple layers. In this respect, the molecular weight distribution and the melting point are measured by the GPC and DSC analyses described above, and the absorption spectrum is obtained by the following method.

Absorption spectrum:

The absorption spectrum of a polyolefin microporous membrane was determined using infrared absorption spectrometry (IR).

Measurement conditions:

•   Measuring apparatus:
•   Measurement mode:
•   Detector: MCT
•   Scanning speed: 5 kHz
•   Cumulative number: 64
•   Resolution: $4cm^{-1}$
•   Measurement wavelength: 4000-700 $cm^{-1}$

(12) Ratio between layers

The ratio between the layers of a polyolefin microporous membrane was measured using a transmission electron microscope (TEM) under the following measurement conditions.

Measurement conditions:

- Sample preparation: a polyolefin microporous membrane is stained with ruthenium tetroxide and cut with an ultramicrotome to expose a surface.
- Measuring apparatus: transmission electron microscope (JEM-1400Plus manufactured by JEOL Ltd.)
- Observation condition: acceleration voltage: 100 kV
- Observation direction: TD/ZD

[Example 1]

(1) Preparation of a solution for making Layer A (hereinafter sometimes referred to as "Layer A solution")

A polyolefin resin composition comprising 30% by mass of an isotactic polypropylene having a Mw of $2.0 \times 10^6$ (melting point: 162°C) and 70% by mass of an ultra-high molecular weight polyethylene having a Mw of $1.5 \times 10^6$ was melt-blended with liquid paraffin in a twin-screw extruder to prepare a solution for making Layer A.

(2) Preparation of a solution for making Layer B (hereinafter sometimes referred to as "Layer B solution")

A polyolefin resin composition comprising 80% by mass of the ultra-high molecular weight polyethylene having a Mw of $1.5 \times 10^6$ and 20% by mass of a polyethylene having a Mw of $1.0 \times 10^5$ was melt-blended with liquid paraffin in a twin-screw extruder to prepare a solution for making Layer B. (3) Formation of a gel-like multilayer sheet

The solutions were fed from the twin-screw extruders to a three-layer manifold T-die and were extruded to form three layers in the Layer B/Layer A/Layer B configuration and a film thickness ratio of 35/30/35. The extrudate was stretched and cooled at a stretching speed of 4 m/min with a chill roll adjusted at 25°C to form a gel-like trilayer sheet.

(4) First stretching, removal of a membrane-forming solvent, and drying

The gel-like trilayer sheet was biaxially stretched simultaneously in both MD and TD to a draw ratio of 5 at 113°C by a tentering machine and then directly heat-set at a temperature of 110°C in the tentering machine while maintaining the width of the sheet. Next, the stretched gel-like trilayer sheet was immersed in methylene chloride in a wash tub to remove liquid paraffin and was air-dried at room temperature.

(5) Second Stretching and heat treatment

Afterwards, the stretched gel-like trilayer sheet was stretched in TD to a draw ratio of 1.8 by a tentering machine preheated at 127°C, relaxed in TD by 4%, and then heat-set in a tenter at 127°C while maintaining the width of the sheet to obtain a polyolefin microporous membrane in the Layer B/Layer A/Layer B configuration. The properties of the obtained polyolefin microporous membrane are shown in Table 1.

[Example 2]

A polyolefin microporous membrane in the Layer A/Layer B/Layer A configuration was produced in the same manner as in Example 1, except that the solutions for the gel-like multilayer sheet were fed to form three layers in the Layer A/Layer B/Layer A configuration and a film thickness ratio of 15/70/15, and that the ultra-high molecular weight polyethylene having a Mw of $1.5 \times 10^6$ in the polyolefin resin composition of Layer A was changed to an ultra-high molecular weight polyethylene having a Mw of $8.0 \times 10^5$.

[Example 3]

A polyolefin microporous membrane in the Layer A/Layer B/Layer A configuration was produced in the same manner as in Example 2, except that the contents of the isotactic polypropylene having a Mw of $2.0 \times 10^6$ (melting point: 162°C) and the ultra-high molecular weight polyethylene having a Mw of $8.0 \times 10^5$ in the polyolefin resin composition were respectively changed to 10% by mass and 90% by mass for the preparation of a solution for making Layer A, and that the conditions of the second stretch were altered.

[Example 4]

A polyolefin microporous membrane in the Layer A/Layer B/Layer A configuration was produced in the same manner as in Example 2, except that the contents of the ultra-high molecular weight polyethylene having a Mw of 1.5 $\times 10^6$ and the polyethylene having a Mw of $1.0 \times 10^5$ in the polyolefin resin composition were respectively changed to 70% by mass and 30% by mass for the preparation of a solution for making Layer B, and that the conditions of the second stretch were altered.

[Example 5]

A polyolefin microporous membrane in the Layer A/Layer B/Layer A configuration was produced in the same manner as in Example 2, except that the contents of the ultra-high molecular weight polyethylene having a Mw of $1.5 \times 10^6$ and the polyethylene having a Mw of $1.0 \times 10^5$ in the polyolefin resin composition were respectively changed to 90% by mass and 10% by mass for the preparation of a solution for making Layer B, and that the conditions of the second stretch were altered.

[Example 6]

A polyolefin microporous membrane in the Layer A/Layer B/Layer A configuration was produced in the same manner as in Example 2, except that the ultra-high molecular weight polyethylene having a Mw of $1.5 \times 10^6$ in the polyolefin resin composition was changed to an ultra-high molecular weight polyethylene having a Mw of $1.8 \times 10^6$ for the preparation of a solution for making Layer B.

[Example 7]

A polyolefin microporous membrane in the Layer A/Layer B/Layer A configuration was produced in the same manner as in Example 2, except that the draw ratio in TD for the second stretch was changed to 3.0.

[Example 8]

A polyolefin microporous membrane in the Layer A/Layer B/Layer A configuration was produced in the same manner as in Example 2, except that the solutions of the gel-like multilayer sheet were fed to form three layers in the Layer B/Layer A/Layer B configuration and a film thickness ratio of 15/70/15.

[Example 9]

In the preparation of a solution for making Layer A, a polyolefin resin composition comprising 7% by mass of the isotactic polypropylene having a Mw of $2.0 \times 10^6$ (melting point: 162°C), 70% by mass of the ultra-high molecular weight polyethylene having a Mw of $1.5 \times 10^6$, and 23% by mass of the polyethylene having a Mw of $1.0 \times 10^5$ was melt-blended with liquid paraffin in a twin-screw extruder to prepare a solution of Layer A. The solution of Layer A was fed from the twin-screw extruder to a monolayer manifold T-die, and a gel-like monolayer sheet was obtained after cooling. The subsequent steps similar to those of Example 2 were performed to produce a polyolefin microporous membrane comprising the Layer A.

[Comparative Example 1]

A polyolefin microporous membrane in the Layer A/Layer B/Layer A configuration was produced in the same manner as in Example 2, except that the ultra-high molecular weight polyethylene having a Mw of $8.0 \times 10^5$ in the polyolefin resin composition of Layer A and the ultra-high molecular weight polyethylene having a Mw of $1.5 \times 10^6$ in the polyolefin resin composition of Layer B were changed to an ultra-high molecular weight polyethylene having a Mw of $2.3 \times 10^6$ for the preparation of a solution.

[Comparative Example 2]

A polyolefin microporous membrane in the Layer A/Layer B/Layer A configuration was produced in the same manner as in Example 2, except that the ultra-high molecular weight polyethylene having a Mw of $8.0 \times 10^5$ in the polyolefin resin composition of Layer A and the ultra-high molecular weight polyethylene having a Mw of $1.5 \times 10^6$ in the polyolefin resin composition of Layer B were changed to a polyethylene having a Mw of $6.0 \times 10^5$ for the preparation of a solution.

[Comparative Example 3]

A polyolefin microporous membrane in the Layer A/Layer B/Layer A configuration was produced in the same manner as in Example 2, except that the draw ratio in TD for the second stretch was changed to 1.2.

[Comparative Example 4]

A polyolefin microporous membrane in the Layer A/Layer B/Layer A configuration was produced in the same manner as in Example 2, except that the draw ratio in TD for the second stretch was changed to 4.0.

[Comparative Example 5]

A polyolefin microporous membrane in the Layer A/Layer B/Layer A configuration was produced in the same manner as in Example 2, except that the polyolefin resin composition of Layer A was changed to a composition comprising 20% by mass of the isotactic polypropylene having a Mw of $2.0 \times 10^6$ (melting point: 162°C) and 80% by mass of a polyethylene having a Mw of $3.5 \times 10^5$ and the polyolefin resin composition of Layer B was changed to a composition comprising 40% by mass of the ultra-high molecular weight polyethylene having a Mw of $2.3 \times 10^6$ and 60% by mass of the polyethylene having a Mw of $3.5 \times 10^5$ for the preparation of solutions, and that the draw ratio in TD for the second stretch was changed to 2.0.

[Comparative Example 6]

A polyolefin microporous membrane in the Layer A/Layer B/Layer A configuration was produced in the same manner as in Example 2, except that the polyolefin resin composition was changed to a composition comprising 10% by mass of the isotactic polypropylene having a Mw of $2.0 \times 10^6$ (melting point: 162°C), 70% by mass of the ultra-high molecular weight polyethylene having a Mw of $1.5 \times 10^6$, and 20% by mass of a polyethylene terephthalate (non-polyolefin resin) for the preparation of a solution of Layer A.

Table 1-1

| | | | Example 1 | Example 2 | Example 3 | Example 4 | Example 5 | Example 6 | Example 7 | Example 8 |
|---|---|---|---|---|---|---|---|---|---|---|
| Composition | Layer A | Ratio of UHPE (% by mass) | 70 | 70 | 90 | 70 | 70 | 70 | 70 | 70 |
| | | Ratio of PP (% by mass) | 30 | 30 | 10 | 30 | 30 | 30 | 30 | 30 |
| | | Ratio of other PE (% by mass) | 0 | 0 | 0 | 0 | 0 | 0 | 0 | 0 |
| | | Resin concentration (% by mass) | 20 | 20 | 20 | 20 | 20 | 20 | 20 | 20 |
| | Layer B | Ratio of UHPE (% by mass) | 80 | 80 | 80 | 70 | 90 | 80 | 80 | 80 |
| | | Ratio of PP (% by mass) | 0 | 0 | 0 | 0 | 0 | 0 | 0 | 0 |
| | | Ratio of other PE (% by mass) | 20 | 20 | 20 | 30 | 10 | 20 | 20 | 20 |
| | | Resin concentration (% by mass) | 20 | 20 | 20 | 20 | 20 | 20 | 20 | 20 |
| Layer constitution | | Layer configuration | B/A/B | A/B/A | A/B/A | A/B/A | A/B/A | A/B/A | A/B/A | A/B/A |
| | | Percent thickness of Layer A (%) | 30 | 30 | 30 | 30 | 30 | 30 | 30 | 20 |
| Production conditions | Second stretch | Temperature (°C) | 127 | 127 | 128 | 126 | 128 | 127 | 127 | 127 |
| | | Stretching Magnification | 1.8 | 1.8 | 2 | 1.8 | 2 | 1.8 | 3 | 1.8 |

(continued)

| Physical properties | Thickness (μm) | | Example 1 | Example 2 | Example 3 | Example 4 | Example 5 | Example 6 | Example 7 | Example 8 |
|---|---|---|---|---|---|---|---|---|---|---|
| | Thickness (μm) | | 7.0 | 7.0 | 7.0 | 7.0 | 7.0 | 7.0 | 7.0 | 7.0 |
| | Porosity (%) | | 40 | 40 | 40 | 40 | 40 | 40 | 40 | 40 |
| | Air resistance (sec/100 cc) | | 70 | 65 | 50 | 65 | 70 | 70 | 70 | 70 |
| | Calculated pin puncture strength (cN) for the porosity of 40% and the thickness of 7 μm | | 324 | 304 | 314 | 294 | 314 | 324 | 333 | 309 |
| | Shutdown temperature (°C) | | 138 | 137 | 138 | 137 | 139 | 139 | 140 | 137 |
| | Meltdown temperature (°C) | | 180 | 175 | 165 | 170 | 175 | 175 | 175 | 165 |
| | GPC | Percentage area of polymers with a molecular weight of 30,000 or less | 6 | 7 | 6 | 8 | 6 | 5 | 6 | 6 |
| | | Percentage area of polymers with a molecular weight of 500,000 to 1,500,000 (%) | 28 | 27 | 30 | 27 | 30 | 32 | 28 | 28 |
| | Orientation ratio measured by Raman spectroscopy (-) | | 0.60 | 0.60 | 0.58 | 0.70 | 0.57 | 0.58 | 0.50 | 0.60 |
| | Endothermic peak temperature (°C) observed by DSC (not lower than 160°C) | | 165 | 165 | 165 | 165 | 165 | 165 | 166 | 165 |
| | Percentage change in membrane thickness after hot compression (%) | | 8.4 | 8.5 | 8.3 | 9.0 | 8.2 | 8.2 | 7.0 | 8.4 |
| | Standard deviation of the percentage change in membrane thickness (%) | | 0.7 | 0.8 | 0.7 | 0.9 | 0.7 | 0.6 | 0.6 | 0.9 |

Table 1-2

| | | | Example 9 | Comparative Example 1 | Comparative Example 2 | Comparative Example 3 | Comparative Example 4 | Comparative Example 5 | Comparative Example 6 |
|---|---|---|---|---|---|---|---|---|---|
| Composition | Layer A | Ratio of UHPE (% by mass) | 70 | 70 | 0 | 70 | 70 | 0 | 70 |
| | | Ratio of PP (% by mass) | 7 | 30 | 30 | 30 | 30 | 20 | 10 (non-PO resin) |
| | | Ratio of other PE (% by mass) | 23 | 0 | 70 | 0 | 0 | 80 | 20 |
| | | Resin concentration (% by mass) | 20 | 23 | 23 | 23 | 23 | 23 | 23 |
| | Layer B | Ratio of UHPE (% by mass) | - | 80 | 0 | 80 | 80 | 40 | 80 |
| | | Ratio of PP (% by mass) | - | 0 | 0 | 0 | 0 | 0 | 0 |
| | | Ratio of other PE (% by mass) | - | 20 | 100 | 20 | 20 | 60 | 20 |
| | | Resin concentration (% by mass) | - | 23 | 23 | 23 | 23 | 23 | 23 |
| Layer constitution | Layer configuration | | A | A/B/A | A/B/A | A/B/A | A/B/A | A/B/A | A/B/A |
| | Percent thickness of Layer A (%) | | 100 | 30 | 30 | 30 | 30 | 30 | 30 |
| Production conditions | Second stretch | Temperature (°C) | 127 | 127 | 127 | 127 | 127 | 127 | 127 |
| | | Stretching Magnification | 1.8 | 1.8 | 1.8 | 1.2 | 4 | 2 | 1.8 |
| Physical properties | Thickness ($\mu$m) | | 7.0 | 7.0 | 10 | 7.0 | 7.0 | 9.0 | 16 |
| | Porosity (%) | | 40 | 40 | 50 | 40 | 40 | 45 | 40 |
| | Air resistance (sec/100 cc) | | 70 | 65 | 80 | 75 | 50 | 80 | 250 |
| | Calculated pin puncture strength (cN) for the porosity of 40% and the thickness of 7 $\mu$m | | 310 | 294 | 206 | 265 | 304 | 294 | 225 |
| | Shutdown temperature (°C) | | 138 | 141 | 139 | 136 | 143 | 134 | 136 |
| | Meltdown temperature (°C) | | 165 | 175 | 175 | 175 | 175 | 175 | 175 |

| | | | Example 9 | Comparative Example 1 | Comparative Example 2 | Comparative Example 3 | Comparative Example 4 | Comparative Example 5 | Comparative Example 6 |
|---|---|---|---|---|---|---|---|---|---|
| | GPC | Percentage area of polymers with a molecular weight of 30,000 or less | 6 | 12 | 6 | 7 | 7 | 12 | 7 |
| | | Percentage area of polymers with a molecular weight of 500,000 to 1,500,000 (%) | 28 | 22 | 22 | 27 | 27 | 22 | 27 |
| | Orientation ratio measured by Raman spectroscopy (-) | | 0.70 | 0.70 | 1.20 | 1.20 | 0.60 | 0.70 | 1.00 |
| | Endothermic peak temperature (°C) observed by DSC (not lower than 160°C) | | 165 | 165 | 165 | 165 | 165 | 165 | 165 |
| | Percentage change in membrane thickness after hot compression (%) | | 9.0 | 15.0 | 18.0 | 13.0 | 13.0 | 15.0 | 18.0 |
| | Standard deviation of the percentage change in membrane thickness (%) | | 0.8 | 1.5 | 1.5 | 1.3 | 1.8 | 1.3 | 2.0 |

In the tables, the terms "UHPE," "PP," and "other PE" refer to "an ultra-high molecular weight polyethylene," "polypropylene," and "a polyethylene other than the ultra-high molecular weight polyethylene," respectively.

**Claims**

1. A polyolefin microporous membrane mainly composed of a polyolefin resin, wherein in a differential molecular weight distribution curve obtained by gel permeation chromatography (GPC) of the polyolefin microporous membrane, the percentage area of polymers with a molecular weight of 30,000 or less is not more than 10% and the percentage area of polymers with a molecular weight of not less than 500,000 and not more than 1,500,000 is not less than 25%, and wherein Raman spectroscopy indicates that the polyolefin microporous membrane has an orientation ratio of less than 0.8.

2. The polyolefin microporous membrane of claim 1, wherein in a curve of heat flow versus temperature obtained by differential scanning calorimetry (DSC) of the polyolefin microporous membrane, the value of $\Delta H$ calculated by the formula below is not less than 0.2, where $\Delta H1$ represents the endothermic heat of fusion in the temperature range of 0 to 157°C during the first run, and $\Delta H2$ represents the endothermic heat of fusion in the temperature range of 0 to 157°C during the second run:

$$\Delta H = (\Delta H1 - \Delta H2) / \Delta H2.$$

3. The polyolefin microporous membrane of claim 1 or 2, wherein in the curve of heat flow versus temperature obtained by differential scanning calorimetry (DSC), one of endothermic peaks is observed at a temperature of not lower than 160°C.

4. The polyolefin microporous membrane of any one of claims 1 to 3, wherein the polyolefin microporous membrane comprises two or more layers, each mainly composed of a polyolefin resin.

5. The polyolefin microporous membrane of any one of claims 1 to 4, wherein the standard deviation of the percentage change in membrane thickness after hot compression is less than 1%.

6. The polyolefin microporous membrane of any one of claims 1 to 5, wherein the percentage change in membrane thickness after hot compression is less than 10%.

7. The polyolefin microporous membrane of any one of claims 1 to 6, wherein the polyolefin microporous membrane with a thickness of 7 $\mu$m and a porosity of 40% is calculated to have a pin puncture strength of not less than 294 cN.

8. The polyolefin microporous membrane of any one of claims 1 to 7, wherein the polyolefin microporous membrane has a shutdown temperature of not higher than 140°C and a meltdown temperature of not lower than 165°C.

9. A laminated polyolefin microporous membrane, comprising the polyolefin microporous membrane of any one of claims 1 to 8 and further one or more coating layers provided on at least one surface thereof.

| | INTERNATIONAL SEARCH REPORT | International application No.<br><br>**PCT/JP2022/001026** |
|---|---|---|

| A. | CLASSIFICATION OF SUBJECT MATTER |
|---|---|

*B29K 23/00*(2006.01)n; *B29K 105/04*(2006.01)n; *B29L 7/00*(2006.01)n; ***B32B 5/32***(2006.01)i; ***B32B 27/32***(2006.01)i; ***C08J 9/00***(2006.01)i; ***B29C 44/06***(2006.01)i; ***B29C 67/20***(2006.01)i; ***H01M 50/409***(2021.01)i
FI:   B32B27/32 E; B32B5/32; B29C67/20 B; B29C44/06; H01M50/409; C08J9/00 A CES; B29L7:00; B29K105:04; B29K23:00

According to International Patent Classification (IPC) or to both national classification and IPC

| B. | FIELDS SEARCHED |
|---|---|

Minimum documentation searched (classification system followed by classification symbols)

B29K23/00; B29K105/04; B29L7/00; B32B5/32; B32B27/32; C08J9/00; B29C44/06; B29C67/20; H01M50/409

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2008-255306 A (TONEN CHEMICAL CORP.) 23 October 2008 (2008-10-23)<br>entire text, for example, example 4 | 1-9 |
| A | WO 2007/132942 A1 (TONEN CHEMICAL CORP.) 22 November 2007 (2007-11-22)<br>whole document, e.g. example 10 | 1-9 |
| A | WO 2008/026782 A1 (TONEN CHEMICAL CORP.) 06 March 2008 (2008-03-06)<br>whole document, e.g. example 8 | 1-9 |
| A | WO 2008/026780 A1 (TONEN CHEMICAL CORP.) 06 March 2008 (2008-03-06)<br>whole document, e.g. example 8 | 1-9 |
| A | JP 2020-95950 A (TORAY INDUSTRIES, INC.) 18 June 2020 (2020-06-18)<br>entire text | 1-9 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 March 2022** | **05 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/001026**

| Patent document cited in search report | | | Publication date (day/month/year) | Patent family member(s) | | | Publication date (day/month/year) |
|---|---|---|---|---|---|---|---|
| JP | 2008-255306 | A | 23 October 2008 | (Family: none) | | | |
| WO | 2007/132942 | A1 | 22 November 2007 | JP | 2009-537638 | A | |
| | | | | US | 2007/0264483 | A1 | |
| | | | | US | 2010/0151334 | A1 | |
| | | | | EP | 2018406 | A1 | |
| | | | | KR | 10-2009-0019833 | A | |
| | | | | CN | 101448881 | A | |
| | | | | AT | 548413 | T | |
| | | | | TW | 200744745 | A | |
| WO | 2008/026782 | A1 | 06 March 2008 | JP | 2010-502471 | A | |
| | | | | JP | 2013-166376 | A | |
| | | | | US | 2008/0057388 | A1 | |
| | | | | EP | 2057014 | A1 | |
| | | | | KR | 10-2009-0074174 | A | |
| | | | | CN | 101511588 | A | |
| | | | | TW | 200819484 | A | |
| WO | 2008/026780 | A1 | 06 March 2008 | JP | 2010-502472 | A | |
| | | | | JP | 2013-35293 | A | |
| | | | | US | 2008/0057389 | A1 | |
| | | | | EP | 2057013 | A1 | |
| | | | | CN | 101511589 | A | |
| | | | | KR | 10-2009-0057295 | A | |
| | | | | AT | 485162 | T | |
| | | | | TW | 200822422 | A | |
| JP | 2020-95950 | A | 18 June 2020 | (Family: none) | | | |

Form PCT/ISA/210 (patent family annex) (January 2015)

**EP 4 265 404 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018164056 A
- JP 2004161899 A
- WO 2019074122 A
- WO 2015182691 A
- JP 2132327 B
- JP 2002256099 A
- WO 2008016174 A
- WO 2007132942 A